# EUROPÄISCHE PATENTSCHRIFT

(11) **EP 1 209 209 B1**
(45) Veröffentlichungstag und Bekanntmachung des Hinweises auf die Patenterteilung: **30.08.2006**
(21) Anmeldenummer: 01127336.4
(22) Anmeldetag: 20.11.2001
(51) Int. Cl.: C09D 17/00, C09D 5/32, C09D 7/12

(54) **Transparente Pigmente für den UV-Schutz von Oberflächen**
Transparent pigments for protecting surfaces from UV radiation
Pigments transparents pour protéger les surfaces contre le rayonnement UV

(30) Priorität: 21.11.2000 DE 10057509
(43) Veröffentlichungstag der Anmeldung: 29.05.2002
(73) Patentinhaber: Brockhues GmbH & Co. KG, 65396 Walluf (DE)
(72) Erfinder: Dreyer, Ulrich, Dr., 71679 Asperg (DE); Tappertzhofen, Walter, 65399 Kiedrich (DE); Vogler, Stefan Dr., 65396 Walluf (DE)
(74) Vertreter: Maiwald Patentanwalts GmbH

(56) Entgegenhaltungen:
- EP-A- 0 407 796
- EP-A- 1 153 999
- US-A- 4 332 354
- DATABASE WPI Section Ch, Week 198614 Derwent Publications Ltd., London, GB; Class A92, AN 1986-091183 XP002191462 & JP 61 037499 A (NAKAYAMA KAGAKUSHIKOSHO) , 22. Februar 1986 (1986-02-22)

## Beschreibung

Die vorliegende Erfindung betrifft eine Paste gemäß Anspruch 1; bestehend aus mindestens einem transparenten Titandioxid-Pigment und mindestens einem weiteren transparenten Pigment, für die Herstellung eines Oberflächenanstrichs, der die behandelte Oberfläche vor UV-Strahlung schützt, ohne dabei wesentliche Trübungen oder Färbungen durch die Pigmente zu verursachen. Ferner betrifft die vorliegende Erfindung ein Verfahren zur Herstellung dieser Paste.

Schließlich betrifft die vorliegende Erfindung die Verwendung der erfindungsgemäßen Paste zum Schutz von Oberflächen vor UV-Strahlung, ohne daß die verwendeten Pigmente eine maßgebliche Trübung oder Einfärbung auf der Oberfläche bewirken, sowie die Verwendung der erfindungsgemäßen Paste zum Abmischen mit Oberflächenanstrichen.

Viele Materialoberflächen, besonders auch Holzuntergründe, werden von UV-Strahlung stark angegriffen und zerstört. Dem versucht man durch Zugabe von organischen Lichtschutzmitteln (Radikalfänger/UV-Absorber) oder anorganischen Materialien, z.B. transparenten Eisenoxiden, zu begegnen. Der Vorteil des Einsatzes anorganischer Stoffe besteht darin, daß verglichen mit organischen Lichtschutzmitteln keine Zersetzung oder Abbau stattfindet und diese somit permanent wirksam sind. Zudem besitzen organische Lichtschutzmittel oft gesundheitsschädliche und umweltbedenkliche Eigenschaften. Der Schutz vor UV-Strahlen durch anorganische Stoffe wird durch Reflektion und Absorption hervorgerufen. Werden zur Vermeidung von organisch basierten UV-Absorbern anorganische Materialien eingesetzt, existiert das Problem, daß die Transparenz bzw. Farblosigkeit des Anstrichs im zunehmenden Maße beeinträchtigt wird, wenn die Stoffe in Konzentrationen eingesetzt werden, die einen ausreichenden UV-Schutz gewährleisten. Der Anstrich erscheint trübe bei Einsatz von Titandioxiden, Siliciumdioxiden etc. oder farbig bei Einsatz von farbigen, wie z.B. gelben oder roten transparenten Eisenoxiden.

Da der Einsatz von Pigmenten aufgrund deren physiologischer und ökologischer Unbedenklichkeit und guter Witterungsbeständigkeit sehr vorteilhaft ist, wurden im Stand der Technik bereits Ansätze beschrieben, unter Vermeidung organisch basierter UV-Absorber einen UV-Schutz mittels Pigmenten zu erreichen, die jedoch bezüglich des Erhalts der Transparenz und Farblosigkeit oft unbefriedigende Ergebnisse lieferten.

Aus EP 0 270 472 ist beispielsweise bekannt, Metallplättchenpigmente enthaltenden Beschichtungsmitteln transparente Titandioxid-Pigmente zuzusetzen. Die so erhaltenen Beschichtungsmittel bieten zwar gute UV-Schutz-Eigenschaften, weisen aber aufgrund der relativ hohen Konzentration an transparentem Titandioxid erhebliche Farbigkeit und Opaleszenz auf. Aufgrund dessen sind diese Anstriche für den Einsatz als UV-Schutzmittel in farblosen Lasuren und Lacken ungeeignet.

Die europäische Patentschrift EP 0 577 953 behandelt eine fertige Holzlasur auf wässriger Basis unter Verwendung von feinverteiltem Titandioxid als UV-Absorber. Auch hier ergibt sich jedoch das Problem der Trübung bei zunehmenden Pigmentkonzentrationen zur Erzielung ausreichenden UV-Schutzes. Im Übrigen handelt es sich bei der hier beschriebenen Beschichtung um einen bereits fertigen Anstrich, der nicht zum Abmischen mit weiteren Lacken und/oder Lasuren verwendet wird, was für eine breite Anwendbarkeit wünschenswert ist.

Neben Titandioxid-Pigmenten wurden bereits auch andere anorganische Pigmente zum Einsatz als UV-Absorber beschrieben. In EP 0 162 260 wird z.B. eine lufttrocknende Beschichtungszusammensetzung für Holz offenbart, die einen UV-Schutz durch Zugabe von transparenten Eisenoxid-Pigmenten erzielt. Diese Eisenoxid-Pigmente weisen jedoch den entscheidenden Nachteil auf, daß sie in den eingesetzten Mengen den Untergrund einfärben, so daß sie zum Einsatz in farblosen, lasierenden Überzügen nicht geeignet sind.

Nachdem der Einsatz einzelner Pigmente meist keine befriedigenden Ergebnisse liefert, wurden im Stand der Technik auch einige Ansätze in Hinblick auf Mischungen verschiedener Pigmente zur Erzielung eines UV-Schutzes bei gleichzeitiger Erhaltung der Transparenz und Farblosigkeit offenbart.

So wird in DE 3 918 980 ein Überzugsmittel für die Beschichtung von Holz beschrieben, das als UV-Absorber transparentes Titandioxid, Bariumsulfat, Siliciumdioxid oder eine Mischung davon verwendet. Auch bei diesem Stand der Technik handelt es sich nicht um ein für die Abmischung mit Lasuren und Lacken bestimmtes Produkt, sondern um ein fertiges Überzugsmittel.

Die europäische Patentschrift EP 0 609 533 betrifft ein eisenoxidhaltiges Titandioxidpulver, ein Verfahren zu seiner Herstellung und seine Verwendung. Das derartig hergestellte Titandioxid kann in Sonnenschutzmitteln als UV-absorbierendes Mittel bei gleichzeitiger Transparenz für sichtbares Licht eingesetzt werden u.a. auch für Lacke und Kunststoffe, allerdings werden keine Aussagen über Trübungs- oder Einfärbungseigenschaften getroffen. Die in dieser Erfindung beschriebene Pigmentzusammensetzung setzt zudem einen äußerst aufwendigen, mehrstufigen Herstellungsprozeß voraus.

Die japanische Patentanmeldung JP 61037499 A offenbart eine Pigmentzusammensetzung bestehend aus mikrofeinem Eisenoxid und mikrofeinem Titandioxid für den UV-Schutz UVsensitiver Materialien.

Die europäische Patentanmeldung EP 0 407 796 A1 beschreibt lufttrocknende Alkylharze und ihre Verwendung in Beschichtungsmitteln insbesondere für Holz, wobei diese Beschichtungsmittel ggf. transparente Pigmente wie Titandioxid und Eisenoxid enthalten.

Die europäische Patentanmeldung EP 1 153 999 A1 beschreibt eine fotokatalytische Überzugszusammensetzung welche Titandioxidmikroteilchen in Kombination mit einem weiteren anorganischen Pigment enthalten.

Nachdem im bisherigen Stand der Technik bisher noch keine optimale Lösung für Pigmentzusammensetzungen und Anstrichen beimischbare Verarbeitungsformen solcher Pigmentzusammensetzungen offenbart wurde, die gleichzeitig einen ausreichenden UV-Schutz für den behandelten Untergrund und Erhalt der Transparenz und Farblosigkeit dieses Untergrunds gewährleisten, besteht weiterhin großer Bedarf nach derartigen Zusammensetzungen und deren leicht herstellbaren und applizierbaren Formulierungen.

Eine Aufgabe der vorliegenden Erfindung ist es, eine Formulierung zur Einarbeitung in Überzugsmittel für die vor UV-Strahlung zu schützenden Oberflächen bereitzustellen, die eine geeignete Auswahl und Gehalt an Pigmenten und anderen Bestandteilen enthält, so daß ein ausreichender Schutz vor UV-Strahlung gewährleistet ist, ohne den Untergrund maßgeblich einzufärben oder zu trüben und, die in fertige Anstriche eingearbeitet werden kann.

Eine weitere Aufgabe der vorliegenden Erfindung ist es, ein einfaches Herstellungsverfahren für eine derartige Formulierung bereitzustellen.

Eine weitere Aufgabe der vorliegenden Erfindung ist es, einen Oberflächenanstrich bereitzustellen, der einen ausreichenden Schutz vor UV-Strahlung gewährleistet, ohne den Untergrund maßgeblich einzufärben oder zu trüben.

Zur Lösung dieser Aufgaben dienen die in den unabhängigen Ansprüchen definierten Merkmale.

Vorteilhafte Ausgestaltungen der vorliegenden Erfindung ergeben sich aus den Unteransprüchen und der folgenden Beschreibung

Die Lösung für die Aufgabe der vorliegenden Erfindung stellt eine Paste für die Herstellung eines Oberflächenanstrichs gemäβ Anspruch 1, insbesondere für Holz und dergleichen, dar. Diese umfaßt mindestens ein transparentes Titandioxid-Pigment, mindestens ein transparentes Eisenoxid-Pigment, mindestens ein Lösemittel und gegebenenfalls mindestens ein Bindemittel und/oder Netzharz. Hierbei ist der Gehalt an transparentem Titandioxid-Pigment in der Paste so gewählt, daß die Paste zu einem vor UV-Strahlung schützenden Anstrich verarbeitet werden kann, der keine störende Trübung zeigt, und der Gehalt an transparenten Eisenoxid-Pigment ist so gewählt, daß der fertige Anstrich die Oberfläche vor UV-Strahlung schützt, ohne sie maßgeblich einzufärben.

Die Teilchengröße des mindestens einen transparenten Titandioxid-Pigments liegt in einem Bereich von 1 - 100 nm, bevorzugt 1 - 70 nm, mehr bevorzugt 5 - 50 nm und besonders bevorzugt 10- 40 nm und die Teilchengröße des mindestens einen transparenten Eisenoxid-Pigments in einem Bereich von 10 - 100 nm. Besonders bevorzugte Teilchengrößen sind z.B. 30 - 35 nm und/oder 10 - 15 nm für transparentes Titandioxid und 30-50 nm und/oder 60 - 80 nm für das mindestens eine transparente Einsenoxid-Pigment. Die Teilchengröße ist so gewählt, daß die Teilchen groß genug sind, daß sie die UV-Strahlung reflektieren können und klein genug sind, um nach der Einarbeitung der Paste in einen Anstrich dennoch den Untergrund nicht wesentlich einzufärben oder den Anstrich zu trüben.

In einer besonders bevorzugten Ausführungsfbrm der erfindungsgemäßen Paste wird das mindestens eine transparente Eisenoxid-Pigment ausgewählt aus der Gruppe bestehend aus Eisenoxidgelb, Eisenoxidrot, Eisenoxidbraun und Eisenoxidschwarz und Mischungen davon.

Die erfindungsgemäße Paste enthält das mindestens eine transparente Eisenoxid-Pigment in einem Gewichtsverhältnis zu dem mindestens einen transparenten Titandioxid-Pigment von 1 : 11 bis 1 : 2.

Handelt es sich bei dem einen transparenten Eisenoxid-Pigment um Eisenoxidgelb, so liegt das bevorzugte Gewichtsverhältnis zu dem mindestens einen transparenten Titandioxid-Pigment bei 1 : 4 bis 1 : 2, z.B. bei 1:3. Wird als transparentes Eisenoxid-Pigment Eisenoxidrot verwendet, liegt das bevorzugte Gewichtsverhältnis zu dem mindestens einen transparenten Titandioxid-Pigment bei 1 : 11 bis 1 : 9, z.B. bei 1:10

Um der erfindungsgemäßen Paste eine für ihren Verwendungszweck geeignete Konsistenz zu verleihen, sind meist außer den den UV-Schutz gewährleistenden Pigmenten weitere Bestandteile enthalten, nämlich mindestens ein Bindemittel und/oder Netzharz, das bevorzugt ausgewählt wird aus der Gruppe der Alkydharze für lösemittelhaltige System oder Acrylate und/oder Copolymerisate der Acrylate für wässerige Systeme, mindestens ein Lösemittel, bevorzugt Testbenzin oder Wasser, und gegebenenfalls verschiedene Additive, wie z.B. Dispergiermittel, Netzmittel, Mahlhilfsmittel, Verdicker und/oder dergleichen.

Eine weitere Lösung der Aufgabe dieser Erfindung stellt ein Verfahren zur Herstellung der erfindungsgemäßen Paste dar, bei dem die einzelnen Bestandteile in einem Behälter vorgelegt und homogenisiert werden und die resultierende Mischung auf einer Perlmühle, Kugelmühle oder dergleichen bis zu der gewünschten Feinheit vermahlen wird. Dabei werden die Pigmentagglomerate zerschlagen und die Pigmentteilchen vom Bindemittel und den Additiven umhüllt.

Eine weitere erfindungsgemäße Lösung für die Aufgabe der vorliegenden Erfindung stellt ein Oberflächenanstrich dar, der die erfindungsgemäße Paste enthält und durch Abmischen eines fertigen Anstrichs, z.B. einer Holzlasur, mit der erfindungsgemäßen Pigmentzusammensetzung oder Paste hergestellt wird.

Um einen optimalen Schutz vor UV-Strahlen zu erzielen ohne den behandelten Untergrund maßgeblich zu trüben und/oder einzufärben, enthält dieser Oberflächenanstrich nach Abmischung mit der erfindungsgemäßen Paste in einer bevorzugten Ausführungsform, bezogen auf die Auftragsfläche, von 0.01 bis 1.5 g/m², bevorzugt von 0.1 bis 1 .2 g/m², mehr bevorzugt von 0.3 bis 1.0 g/m² und besonders bevorzugt von 0.5 bis 0.8 g/m² an transparentem Titandioxid-Pigment und von 0.001 bis 1.5 g/m², bevorzugt von 0.005 bis 1.0 g/m², mehr bevorzugt von 0.01 bis 0.5 g/m² und besonders bevorzugt von 0.03 bis 0.3 g/m² an dem mindestens einen transparenten Eisenoxid-Pigment.

Handelt es sich hierbei bei dem einen transparent Eisenoxid-Pigment um transparentes Eisenoxidgelb, enthält der Oberflächenanstrich dieses Pigment in einer besonders bevorzugten Ausführungsform, bezogen auf die Auftragsfläche, in einer Menge von 0.1 bis 0.3 g/m², z.B 0,15 g/m² und/oder 0,25 g/m². Wird als weiteres transparentes Eisonoxid-Pigment transparentes Eisenoxidrot verwendet, beträgt der besonders bevorzugte Gehalt dieses Pigments in dem erfindungsgemäßen Oberflächenanstrich, bezogen auf die Auftragsfläche, von 0.03 bis 0.1 g/m², z.B. zwischen 0,05 g/m² und 0,08 g/m² ohne jeweils den Untergrund maßgebend einzufärben und dabei gleichzeitig ausreichenden UV-Schutz zu gewährleisten.

Weiterhin wird erfindungsgemäß die Verwendung der erfindugsgemäßen Paste zum Schutz von Oberflächen, insbesondere von Holz, vor UV-Strahlung ohne wesentliche Trübung oder Einfärbung der behandelten Oberfläche bereitgestellt, demgemäß die erfindungsgemäße Paste nach Vermischen zu dem erfindungsgemäßen Oberflächenanstrich auf die zu schützenden Oberflächen aufgebracht wird. Die erfindungsgemäße Paste sowie der erfindungsgemäße Oberflächenanstrich können hierbei für den Schutz von Oberflächen, insbesondere von Holz vor UV-Strahlung, verwendet werden, ohne die behandelte Oberfläche maßgeblich zu trüben oder einzufärben.

Schließlich kann die erfindungsgemäße Paste zum Abmischen mit farblosen sowie farbigen Anstrichen, insbesondere Holzlasuren verwendet werden.

Bei den im Rahmen der vorliegenden Erfindung verwendeten transparenten Pigmenten handelt es sich in der Regel um handelsübliche, transparente Pigmente mit passenden Teilchengrößen. So können für das mindestens eine transparenten Titandioxid-Pigment z.B. Pigmente der UV-Titan-Serie (Kemira), insbesondere UV-Titan L 181 und/oder Pigmente der Hombitec® RM-Serie (Sachtleben), insbesondere Hombitec RM 400 verwendet werden.

Als Eisenoxid-Pigmente können sämtliche handelsüblichen transparenten Eisenoxid-Pigmente der entsprechenden Teilchengröße verwendet werden, z.B. Pigmente der Sicotrans® -Serie (BASF), insbesondere Sicotrans 1916 (Eisenoxidgelb) und/oder Sicotrans 2816 (Eisenoxidrot).

In den erfindungsgemäßen Pasten können im allgemeinen sowohl mit Wasser, als auch mit organischen Lösemitteln lösliche oder verdünnbare Bindemittel eingesetzt werden. Gängige, einsetzbare Bindemittel stellen z.B. Alkydharze, Acrylharze, Polyurethanharze, Polyesterharze, Epoxidharze, Silikonharze, Melaminharze, Harnstoffharze, Phenolharze, Acrylate und/oder Mischungen daraus dar, wobei Alkydharze und Acrylatharze besonders bevorzugt sind. Auch verschiedene Kunststoffe, wie z.B. Polychloropren, Polyvinylchlorid, Polyvinylacetat, Polyvinylpropionat, Polymethacrylat, Polyethylacrylat, Styrolacrylat, Styrol-Butadien, Polyvinylbutyral und/oder Mischungen daraus sowie Zellulosenitrat, Chlorkautschuk, Zyklokautschuk und/oder Mischungen sind als Bindemittel denkbar.

Als Lösemittel können Wasser wie auch organische Lösemittel, wie z.B. Testbenzin, Terpentinöl, Terpentin, Tetralin, Dekalin, Toluol, Xylol, Styrol, Alkylbenzol, (C₁-C₄)-Alkohole, Diacetonalkohol, Benzylalkohol, (C₃-C₆)-Ester, (C₃-C₇)-Ketone, Tetrahydrofuran, Dipropylenglykolmethylether, Butylglykol, Methyldiglykol, Ethyldiglykol, Glykolether, Esterether, Etheralkohole, Aliphaten, Aromaten, chlorierte Kohlenwasserstoffe, Hydroaromaten, Terpenkohlenwasserstoffe und/oder Mischungen davon eingesetzt werden. Erfindungsgemäß besonders bevorzugt eingesetzt wird z.B. Wasser und/oder Testbenzin.

Des weiteren enthält die erfindungsgemäße Paste gegebenenfalls Additive, wie z.B. Dispergiermittel, (z.B. Polyacrylate, Acrylsäurecopolymere, Oleate, Fettalkohole u.a.), Netzmittel, Mahlhilfsmittel, Verdicker und/oder dergleichen.

Im Rahmen der vorliegenden Erfindung sind auch Abmischungen der erfindungsgemäßen Paste mit Farben, wie z.B. Rot, Gelb und Ruß möglich, um beispielsweise gezielte Farbstiche auf dem zu behandelnden Untergrund zu erzielen.

Die erfindungsgemäße Paste kann zur Abmischung mit allen handelsüblichen farblosen Anstrichsystemen auf wässeriger oder lösemittelhaltiger Basis, insbesondere für Holz und dergleichen verwendet werden, z.B. mit Holzlasuren, wie z.B. Imprägnierlasuren, Dickschichtlasuren und/oder Dispersionslasuren und -lacken. Ebenso kann die erfindungsgemäße Paste in derartige farbige Anstrichsysteme eingearbeitet werden, etwa um den UV-Schutz des verwendeten Anstrichs zu erhöhen, ohne dessen Farbton zu verfälschen.

Die nachfolgenden Tests und Beispiele dienen der Erläuterung der Erfindung:

Zur Überprüfung der UV-Schutzeigenschaften verschiedener Pigmente in Abhängigkeit von der Eintrübung bzw. Einfärbung wurden gemäß der Richtlinie 3 "UV-Lichtdurchlässigkeit von Anstrichsystemen auf Holz" zum Merkblatt "Anstrichsysteme für Holzfenster" (Mitteilungen des Institutes für Fenstertechnik e. V. Rosenheim, Ausgabe 2/91, 18. Jahrgang) verschiedene Pigmentpasten hergestellt und visuell beurteilt. Als Abprüfmedium, in das die Pasten eingearbeitet wurden, diente dabei eine Lasur auf Alkydharzbasis (Glasurit® ).

Tabelle 1 gibt die Testergebnisse für jeweils nur ein Pigment enthaltende Pasten wieder.

**Tabelle 1:**

| **Pigment** | **Konzentration** | **Visuelle Beurteilung** | **UV-Schutz** |
|---|---|---|---|
| Titandioxid UV-Titan L181 (Kemira) | 1.0 g/m² | Milchige Trübung; schlechte Transparenz | Gerade ausreichend |
| | 0.65 g/m² | Trübung vernachlässigbar | Ungenügend |
| Titandioxid Hombitec RM 400 (Sachtleben) | 1.3 g/m² | Milchige Trübung; schlechte Transparenz | Gerade ausreichend |
| | 1.0 g/m² | Trübung vernachlässigbar | Ungenügend |
| Eisenoxidgelb Sicotrans 1916 (BASF) | 1.5 g/m² | Starke Färbung | Gerade ausreichend |
| Eisenoxidrot Sicotrans 2816 (BASF) | 0.7 g/m² | Starke Färbung | Gerade ausreichend |

In Tabelle 2 werden die Ergebnisse für Pigmentzusammensetzungen enthaltende Pasten dargestellt:

**Tabelle 2**

| **Pigmentzusammensetzung** | **Konzentration** | **Visuelle Beurteilung** | **UV-Schutz** |
|---|---|---|---|
| Titandioxid UV-Titan L181 (Kemira) | 0.55 g/m² | keine Trübung, gute Transparenz, | ausreichend |
| Eisenoxidgelb Sicotrans 1916 (BASF) | 0.15 g/m² | geringe Einfärbung | |
| Titandioxid Hombitec RM 400 (Sachtleben) | 2 0.80 g/m² | keine Trübung, gute Transparenz, | ausreichend |
| Eisenoxidgelb Sicotrans 1916 (BASF) | 0.25 g/m² | geringe Einfärbung | |
| Titandioxid UV-Titan L181 (Kemira) | 0.55 g/m² | keine Trübung, | ausreichend |
| Eisenoxidrot Sicotrans 2816 (BASF) | 0.05 g/m² | gute Transparenz, geringe Einfärbung | |
| Titandioxid Hombitec RM 400 (Sachtleben) | 0.80 g/m² | keine Trübung, | ausreichend |
| Eisenoxidrot Sicotrans 2816 (BASF) | 0.08 g/m² | gute Transparenz, geringe Einfärbung | |

Aus den aufgeführten Tests ist klar ersichtlich, daß bei nur ein Pigment enthaltenden Pasten eine Gewährleistung des UV-Schutzes zwangsläufig mit Eintrübungen oder Einfärbungen einhergeht. Dagegen ermöglicht die Kombination von Pigmenten in einer Pigmentzusammensetzung gemäß der vorliegenden Erfindung eine Reduzierung der Pigmentkonzentrationen und damit ein weitgehendes Ausbleiben von konzentrationsbedingten Trübungs- und Färbungserscheinungen unter Erhalt des notwendigen UV-Schutzes.

Ein Beispiel für die Zusammensetzung einer erfindungsgemäßen Paste stellt folgende Rezeptur dar:

25.5 g Titandioxid UV-Titan L 181 (Kemira), 10.9 g Eisenoxidgelb Sicotrans 1916 (BASF), 41,6 g Alkydharz, 15.8 g Testbenzin und 2 g eines Dispergiermittels werden in einem 250 ml Schüttelglas vorgelegt. Nach Einwaage von 100 g Glaskugeln wird die Mischung auf einem Red Devil bis zur Feinheit von < 10µm vermahlen.

Zur anschließenden Einarbeitung der erfindungsgemäßen Paste in das Anstrichmittel wird eine Zentrifuge verwendet.

## Patentansprüche

1. Paste für die Herstellung eines Oberflächenanstrichs zum Schutz von Oberflächen vor UV-Strahlung, umfassend:
a) mindestens ein transparentes Titandioxid-Pigment mit einer Teilchengröße von 1 - 100 nm,
b) mindestens ein transparentes Eisenoxid-Pigment mit einer Teilchengröße von 10 - 100 nm,
c) mindestens ein Lösemittel,
wobei das mindestens eine transparente Eisenoxid-Pigment in einem Gewichtsverhältnis zu dem mindestens einen transparenten Titandioxid-Pigment von 1 : 11 bis 1 : 2 vorliegt.

2. Paste nach Anspruch 1, ferner umfassend mindestens ein Bindemittel und/oder Netzharz.

3. Paste nach einem der Ansprüche 1 oder 2,
**dadurch gekennzeichnet, dass** das mindestens eine transparente Titandioxid-Pigment eine Teilchengröße von 1 - 70 nm aufweist.

4. Paste nach Anspruch 3,
**dadurch gekennzeichnet, dass** das mindestens eine transparente Titandioxid-Pigment eine Teilchengröße von 10-40 nm aufweist.

5. Paste nach einem der vorhergehenden Ansprüche,
**dadurch gekennzeichnet, dass** das mindestens eine transparente Eisenoxid-Pigment aus der Gruppe bestehend aus Eisenoxidgelb, Eisenoxidrot, Eisenoxidbraun, Eisenoxidschwarz und Mischungen davon ausgewählt ist.

6. Paste nach Anspruch 5,
**dadurch gekennzeichnet, dass** das mindestens eine transparente Eisenoxid-Pigment transparentes Eisenoxidgelb ist und bevorzugt in einem Gewichtsverhältnis von 1 : 4 bis 1 : 2 zu dem mindestens einen transparenten Titandioxid-Pigment vorliegt.

7. Paste nach einem der Ansprüche 1 bis 5,
**dadurch gekennzeichnet, dass** das mindestens eine transparente Eisenoxid-Pigment transparentes Eisenoxidrot ist und in einem Gewichtsverhältnis von 1 : 11 bis 1 : 9 zu dem mindestens einen transparenten Titandioxid-Pigment vorliegt.

8. Paste nach einem der vorhergehenden Ansprüche,
**dadurch gekennzeichnet, dass** sie als Lösemittel Testbenzin und/oder Wasser enthält.

9. Paste nach einem der Ansprüche 2 bis 8,
**dadurch gekennzeichnet, dass** das Bindemittel aus der Gruppe der Alkydharze ausgewählt ist.

10. Paste nach einem der Ansprüche 2 bis 8,
**dadurch gekennzeichnet, dass** bei wässrigen Systemen das Bindemittel aus der Gruppe der Acrylate und/oder Copolymerisate davon ausgewählt ist.

11. Paste nach einem der vorhergehenden Ansprüche,
**dadurch gekennzeichnet, dass** weitere Additive, wie Dispergiermittel, Netzmittel, Mahlhilfsmittel und/oder Verdicker enthalten sind.

12. Verfahren zur Herstellung einer Paste nach einem der vorhergehenden Ansprüche,
**dadurch gekennzeichnet, dass** die einzelnen Bestandteile in einem Mischer vorgelegt und homogenisiert werden und die resultierende Mischung auf einer Mühle vermahlen wird.

13. Verfahren nach Anspruch 12,
**dadurch gekennzeichnet, dass** die Mühle eine Perlmühle oder Kugelmühle ist.

14. Oberflächenanstrich,
**dadurch gekennzeichnet, dass** er eine Paste nach einem der Ansprüche 1 bis 11 enthält.

15. Verwendung der Paste nach einem der Ansprüche 1 bis 11 zum Schutz von Oberflächen, insbesondere von Holz, vor UV-Strahlung, ohne diese maßgeblich zu trüben oder einzufärben.

16. Verwendung der Paste nach einem der Ansprüche 1 bis 11, zum Abmischen mit Anstrichen zur Herstellung eines vor UV-Strahlung schützenden, die Oberflächen nicht maßgeblich trübenden und/oder einfärbenden Oberflächenanstrichs nach Anspruch 14.

17. Verwendung einer Pigmentzusammensetzung umfassend mindestens ein transparentes Titandioxid-Pigment mit einer Teilchengröße von 1 - 100 nm und mindestens ein transparentes Eisenoxid-Pigment mit einer Teilchengröße von 10 -100 nm in einer Paste für die Herstellung eines Oberflächenanstrichs zum Schutz von Oberflächen vor UV-Strahlung, zur Reduzierung der Gesamtkonzentration an transparenten Metalloxid-Pigmenten unter gleichzeitigem Erhalt des UV-Schutzes.

## Claims

1. A paste for the manufacture of a surface coating for protecting surfaces against UV radiation, comprising:
a) at least one transparent titanium dioxide pigment having a particle size of 1 to 100 nm,
b) at least one transparent iron oxide pigment having a particle size of 10 to 100 nm,
c) at least one solvent,
wherein the at least one transparent iron oxide pigment and the at least one transparent titanium dioxide pigment are present in a weight ratio of 1:11 to 1:2.

2. The paste according to claim 1, further comprising at least one binder and/or a resin.

3. The paste according to any one of claims 1 or 2,
**characterized in that** the at least one transparent titanium dioxide pigment has a particle size of 1 to 70 nm.

4. The paste according to claim 3,
**characterized in that** the at least one transparent titanium dioxide pigment has a particle size of 10 to 40 nm.

5. The paste according to any one of the previous claims,
**characterized in that** the at least one transparent iron oxide pigment is selected from the group consisting of iron oxide yellow, iron oxide red, iron oxide brown, iron oxide black and mixtures thereof.

6. The paste according to claim 5,
**characterized in that** the at least one transparent iron oxide pigment is transparent iron oxide yellow and is preferably present in a weight ratio of 1:4 to 1:2 to the at least one transparent titanium dioxide pigment.

7. The paste according to any one of claims 1 to 5,
**characterized in that** the at least one transparent iron oxide pigment is transparent iron oxide red and is present in a weight ratio of from 1:11 to 1:9 to the at least one transparent titanium dioxide pigment.

8. The paste according to any one of the previous claims,
**characterized in that** it contains, as a solvent, white spirit and/or water.

9. The paste according to any one of claims 2 to 8,
**characterized in that** the binder is selected from the group of alkyd resins.

10. The paste according to any one of claims 2 to 8,
**characterized in that** in aqueous systems the binder is selected from the group consisting of acrylates and/or copolymerisates thereof.

11. The paste according to any one of the previous claims,
**characterized in that** it comprises further additives such as dispersing agents, surface active agents, grinding aids, and/or thickeners.

12. A method for the manufacture of a paste according to any one of the previous claims,
**characterized in that** the individual components are provided in a mixer and are homogenized, and the resulting mixture is grinded in a mill.

13. The method of claim 12,
**characterized in that** the mill is a bead mill or ball mill.

14. Surface coating,
**characterized in that** it comprises a paste according to any one of claims 1 to 11.

15. The use of a paste according to any one of claims 1 to 11 for protecting surfaces, particularly of wood, against UV radiation, without significantly blurring or colouring the surfaces.

16. A use of a paste according to any one of claims 1 to 11, for blending it with coatings for the manufacture of a surface coating according to claim 14 which protects against UV radiation and does not significantly blur and/or colour the surfaces.

17. A use of a pigment composition comprising at least one transparent titanium dioxide pigment having a particle size of 1:100 nm and at least one transparent iron oxide pigment having a particle size from 10 to 100 nm in a paste for the manufacture of a surface coating for protecting surfaces against UV radiation, for reducing the total concentration of transparent metal oxide pigments at simultaneous preservation of the UV protection.

## Revendications

1. Pâte pour la fabrication d'un enduit de surface de protection de surfaces contre le rayonnement UV, comprenant :
a) au moins un pigment transparent à l'oxyde de titane avec une granulométrie de 1 - 100 nm,
b) au moins un pigment transparent à l'oxyde de fer avec une granulométrie de 10 - 100 nm,
c) au moins un solvant,
dans laquelle le ou les pigments transparents à l'oxyde de fer sont présents dans un rapport en poids au ou aux pigments transparents à l'oxyde de titane de 1:11 jusqu'à 1:2.

2. Pâte selon la revendication 1, comprenant en outre au moins un liant et/ou une résine réticulée.

3. Pâte selon une des revendications 1 ou 2, **caractérisée en ce que** le ou les pigments transparents à l'oxyde de titane présentent une granulométrie de 1 - 70 nm.

4. Pâte selon la revendication 3, **caractérisée en ce que** le ou les pigments transparents à l'oxyde de titane présentent une granulométrie de 10 - 40 nm.

5. Pâte selon l'une quelconque des revendications précédentes, **caractérisée en ce que** le ou les pigments transparents à l'oxyde de fer sont choisis dans le groupe composé de l'oxyde de fer jaune, de l'oxyde de fer rouge, de l'oxyde de fer brun, de l'oxyde de fer noir et de leurs mélanges.

6. Pâte selon la revendication 5, **caractérisée en ce que** le ou les pigments transparents à l'oxyde de fer sont de l'oxyde de fer jaune transparent, et sont présents préférentiellement dans un rapport en poids de 1:4 jusqu'à 1:2 par rapport au ou aux pigments transparents à l'oxyde de titane.

7. Pâte selon l'une quelconque des revendications 1 à 5, **caractérisée en ce que** le ou les pigments transparents à l'oxyde de fer sont de l'oxyde de fer rouge transparent, et sont présents préférentiellement dans un rapport en poids de 1:11 jusqu'à 1:9 par rapport au ou aux pigments transparents à l'oxyde de titane.

8. Pâte selon l'une quelconque des revendications précédentes, **caractérisée en ce qu'**elle contient comme solvant du white spirit et/ou de l'eau.

9. Pâte selon l'une quelconque des revendications 2 à 8, **caractérisée en ce que** le liant est choisi dans le groupe des résines alkydes.

10. Pâte selon l'une quelconque des revendications 2 à 8, **caractérisée en ce que** dans des systèmes aqueux, le liant est choisi dans le groupe des acrylates et/ou de leurs copolymères.

11. Pâte selon l'une quelconque des revendications précédentes, **caractérisée en ce qu'**elle contient d'autres additifs tels que des dispersants, des agents de réticulation, des adjuvants de broyage et/ou des épaississants.

12. Procédé de fabrication d'une pâte selon l'une quelconque des revendications précédentes, **caractérisé en ce que** tous les composants sont prédisposés et homogénéisés dans un mélangeur, et **en ce que** le mélange obtenu est broyé sur un broyeur.

13. Procédé selon la revendication 12, **caractérisé en ce que** le broyeur est un broyeur à billes ou un broyeur à boulets.

14. Enduit de surface, **caractérisé en ce qu'**il contient une pâte selon une des revendications 1 à 11.

15. Utilisation de la pâte selon une des revendications 1 à 11 pour la protection de surfaces, en particulier de bois, contre le rayonnement UV, sans les troubler ni les colorer de façon prédominante.

16. Utilisation de la pâte selon une des revendications 1 à 11, pour un mélange avec des enduits pour fabriquer un enduit de surface protecteur contre le rayonnement UV selon la revendication 14, qui ne trouble pas et/ou ne colore pas de façon prédominante les surfaces.

17. Utilisation d'une composition de pigment comprenant au moins un pigment transparent à l'oxyde de titane avec une granulométrie de 1 - 100 nm et au moins un pigment transparent à l'oxyde de fer avec une granulométrie de 10 - 100 nm dans une pâte pour la fabrication d'un enduit de surface pour la protection des surfaces contre le rayonnement UV, en vue de réduire la concentration totale en pigments transparents aux oxydes métalliques tout en conservant la protection contre les UV.
